(19) Europäisches Patentamt
European Patent Office
Office européen des brevets

(11) **EP 3 557 671 A1**

(12) **EUROPEAN PATENT APPLICATION**
published in accordance with Art. 153(4) EPC

(43) Date of publication:
**23.10.2019 Bulletin 2019/43**

(51) Int Cl.:
*H01M 8/18* (2006.01)   *H01M 8/04746* (2016.01)

(21) Application number: **17882999.0**

(22) Date of filing: **19.12.2017**

(86) International application number:
**PCT/JP2017/045434**

(87) International publication number:
**WO 2018/117069 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **19.12.2016   JP 2016245564**

(71) Applicant: **Showa Denko K.K.**
**Tokyo 105-8518 (JP)**

(72) Inventor: **SUZUKI, Masahiro**
**Tokyo 105-8518 (JP)**

(74) Representative: **Strehl Schübel-Hopf & Partner**
**Maximilianstrasse 54**
**80538 München (DE)**

(54) **METHOD FOR OPERATING REDOX FLOW CELL**

(57) Disclosed is a method for operating a redox flow battery which has two electrodes including a positive electrode and a negative electrode and a membrane, and performs charge and discharge by supplying a positive electrode electrolyte to the positive electrode and supplying a negative electrode electrolyte to the negative electrode, the method including a step of changing one or both of pressures of the positive electrode electrolyte supplied to the positive electrode and the negative electrode electrolyte supplied to the negative electrode in a cycle of 1/60 to 10 seconds.

EP 3 557 671 A1

**Description**

Technical Field

The present invention relates to a method for operating a redox flow battery.
Priority is claimed on Japanese Patent Application No. 2016-245564, filed on December 19, 2016, the content of which is incorporated herein by reference.

Background Art

It is known that, in a case where charge and discharge of a redox flow battery are repeatedly performed, cell efficiency is gradually reduced.
As a countermeasure therefor, for example, Patent Document 1 discloses a method in which a cleaning liquid (distilled water, a sulfuric acid, or an electrolyte) is forwarded into a battery cell, and thus a foreign substance such as dust clogging an electrode portion is removed.

Citation List

Patent Literature

Patent Document: Japanese Unexamined Patent Application, First Publication No. H10-308232

Summary of Invention

Technical Problem

However, as disclosed in PTL 1, a redox flow battery cannot be operated during cleaning in this method. Thus, in a case where frequent cleaning is performed, this is not efficient.
A foreign substance which is required to be cleaned is likely to occur in a portion of an electrode where an electrolyte stays. Particularly, in a case where an air bubble is mixed into an electrolyte, the air bubble closes pores of an electrode, above-described thus the electrolyte easily stays at the portion. In other words, there is a probability that a foreign substance may be seized at a location where pores are closed. However, in a case where a deaerator or the like is used to remove an air bubble in an electrolyte, this leads to an unnecessary power loss.
The present invention has been made in light of the problems, and an object thereof is to provide a method for operating a redox flow battery, capable of operating the redox flow battery for a long period of time, without causing an unnecessary power loss, by increasing a cleaning interval.

Solution to Problem

The present invention provides the following means in order to solve the problems.
In other words, a first aspect of the present invention is the following method for operating a redox flow battery.

[1] A method for operating a redox flow battery which has two electrodes including a positive electrode and a negative electrode and a membrane, and performs charge and discharge by supplying a positive electrode electrolyte to the positive electrode and supplying a negative electrode electrolyte to the negative electrode, the method including:

a step of changing one or both of pressures of the positive electrode electrolyte which is supplied to the positive electrode and the negative electrode electrolyte which is supplied to the negative electrode in a cycle of 1/60 to 10 seconds.
The method for operating a redox flow battery of the first aspect preferably has the following features.

[2] The method for operating a redox flow battery according to the above [1],
in which an amplitude of the change is equal to or more than 10% of an average pressure of the supplied electrolytes.
[3] The method for operating a redox flow battery according to the above [1] or [2],
in which both of the pressures of the electrolyte which is supplied to the positive electrode and the electrolyte which is supplied to the negative electrode are changed.
[4] The method for operating a redox flow battery according to the above [3],
in which a pressure change of the electrolyte which is supplied to the positive electrode and a pressure change of the electrolyte which is supplied to the negative electrode are synchronized with each other.

[5] The method for operating a redox flow battery according to any one of the above [1] to [4],

in which, in the step, the electrolyte is supplied to the electrode while changing a pressure of the electrolyte, and the electrolyte is exhausted from the electrode at a constant speed.

Advantageous Effects of Invention

According to the present invention, it is possible to operate a redox flow battery for a long period of time.

Brief Description of Drawing

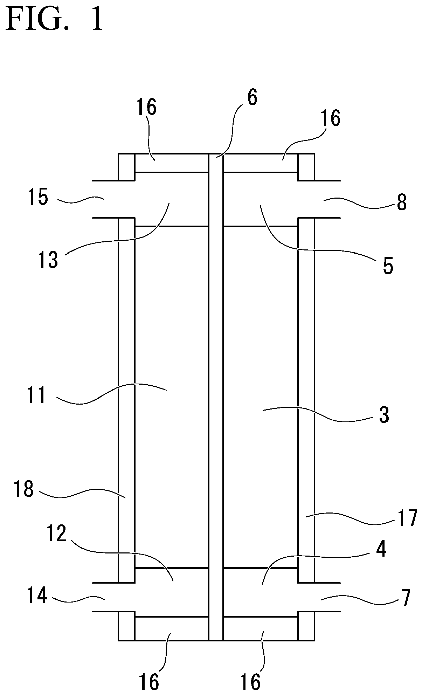

FIG. 1 is a schematic diagram illustrating a sectional view of a preferable aspect (single cell) of a redox flow battery available in the present invention.

Description of Embodiments

Hereinafter, a method for operating a redox flow battery will be described in detail by exemplifying a preferable embodiment, but the present invention is not limited thereto. Appropriate modifications may occur within the scope of being capable of achieving the effect of the present invention. Additions, omissions, replacements, and other changes may occur as necessary within the scope without departing from the spirit of the present invention.

Generally, a redox flow battery has two electrodes such as a positive electrode and a negative electrode, and a membrane, and is charged and discharged by supplying a positive electrode electrolyte to the positive electrode and supplying a negative electrode electrolyte to the negative electrode. A carbon material or the like having pores such as a carbon felt is preferably used as a material of an electrode for the positive electrode and the negative electrode. As the membrane, an ion exchange membrane such as Nafion (registered trademark) is preferably used. A sulfuric acid solution containing vanadium ions is frequently used as the positive electrode and negative electrode electrolytes.

In operating the redox flow battery, in the present embodiment, the electrolyte is supplied such that a pressure of the electrolyte supplied to at least one of the electrodes is changed in a cycle of 1/60 to 10 seconds. In a case where the pressure is changed in the above-described way, an air bubble repeats expansion and contraction such that electrolyte staying at the periphery is alleviated, and the air bubble is destroyed depending on cases. In a case where the cycle of pressure change is too short, a pressure change is likely to be alleviated due to elasticity of a pipe or the like. In a case where the cycle is too long, it is hard to remove the air bubble.

A cycle of changing the pressure may be selected within the range depending on situations. For example, the pressure may be changed in a cycle of 1/10 seconds to 9 seconds. In other situations, the pressure may be changed in a cycle of 2 to 8 seconds and the electrolyte may be supplied, and the pressure may be changed in a cycle of 1/60 to 60/60 second and the electrolyte may be supplied.

More specifically, for example, a step of changing a pressure may include a sub-step A of applying a pressure and a sub-step B of not applying a pressure, the sub-step A may be performed in a period within a range of 1/60 to 10 seconds, the sub-step B may be performed in a period within a range of 1/60 to 10 seconds, and the sub-step A and the sub-step B may be alternately performed a plurality of times. The cycle may be the cycle described in the above examples. Each condition for the step in a combination of the sub-step A and the sub-step B may be changed once, or twice or more in the middle. Alternatively, there may be two or more types of combinations of the sub-step A and the sub-step B, the combinations may be combined with each other as necessary, so as to be performed, for example, alternately, sequentially a plurality of times, or at random.

Regarding periods of the sub-step A and the sub-step B, the sub-step A and the sub-step B may have the periods of an identical length, or the sub-step A may be longer or shorter than the sub-step B.

Regarding periods of the sub-step A and the sub-step B, the sub-step A and the sub-step B may have the periods of an identical length, or the sub-step A may be longer or shorter than the sub-step B.

Furthermore specifically, for example, a step of changing a pressure may include a sub-step C of applying a pressure at a preferably selected value and a sub-step C of applying a pressure lower than the pressure in the sub-step C, the sub-step C may be performed in a period within a range of 1/60 to 10 seconds, the sub-step D may be performed in a period within a range of 1/60 to 10 seconds, and the sub-step D and the sub-step D may be alternately performed a plurality of times. The cycle may be the cycle described in the above examples. A condition for each step in a combination of the sub-step C and the sub-step D may be changed once, or twice or more in the middle. Alternatively, there may be two or more types of combinations of the sub-step C and the sub-step D, the combinations may be combined with each other as necessary, so as to be performed, for example, alternately, sequentially a plurality of times, or at random.

Regarding periods of the sub-step C and the sub-step D, the sub-step C and the sub-step D may have the periods of an identical length, or the sub-step C may be longer or shorter than the sub-step D.

Any value of a pressure may be selected as necessary as a pressure used in the step wherein a pressure is changed. For example, a value of a pressure may be 0 to 200 KPa or 10 to 20 KPa, but is not limited to the examples. Furthermore specifically, for example, any value of a pressure used in the sub-step A may be selected as necessary, and may be, for example, 5 to 20 KPa, or 50 to 150 KPa. Any value of a pressure used in the sub-step C may be selected as necessary, and may be, for example, 10 to 20 KPa, or 80 to 150 KPa. Any value of a pressure used in the sub-step D may be selected as necessary, and may be, for example, 3 to 10 KPa, or 20 to 80 KPa.

A combination of the sub-step A and the sub-step B may be combined with a combination of the sub-step C and the sub-step D.

The pressure change described above may be realized according to any method or by any device. The pressure change may be realized, for example, by moving a plunger pump intermittently or under different conditions, and/or may be realized by causing a flexible pipe to vibrate with a vibrator or the like consecutively or intermittently or under different conditions. Particularly, the latter method using a vibrator is a method in which 1/60 seconds or 1/50 seconds corresponding to a commercial power supply frequency is easily obtained.

As the amplitude of the change becomes larger as long as a mechanical strength of the redox flow battery system to be used is allowed, it becomes easier to remove a foreign substance such as the dust or the air bubble. Thus, the amplitude of the change is preferably equal to or more than 10% of an average pressure of a supplied electrolyte, more preferably equal to or more than 20%, and most preferably equal to or more than 50%. The amplitude is a difference between the maximum value and the minimum value of a changing pressure. The average pressure of a supplied electrolyte indicates an average pressure in the cycle.

In measurement of the pressure, in order to obtain a more accurate value, the pressure is to be measured at a portion close to the electrodes. Specifically, the pressure may be measured at an inlet of an electrolyte to a redox flow battery cell. However, in a case of a redox flow battery system in which a pipe or the like having a certain degree of rigidity is used and a pressure change is hard to alleviate, the system may be operated by simply using an outlet pressure of a pump or the like as an index.

Changing both of the pressures of electrolytes supplied to the positive electrode and the negative electrode as described above enables the redox flow battery to be operated for a long period of time and is preferable.

In a case where the pressure change is synchronized between both of the negative electrode and the positive electrode, this is preferable since a pressure difference between both sides of the membrane is reduced such that damage to the membrane is suppressed.

The method for operating a redox flow battery according to the present invention includes a charge step and a discharge step. The step of supplying an electrolyte while changing a pressure may be performed in both of the charge step and the discharge step, or may be performed in only one thereof.

In a case where an electrolyte is exhausted from an electrode at a constant speed, this is preferable since a pressure change in the electrode is hardly alleviated. Any method of exhausting an electrolyte from an electrode at a constant speed may be selected, but the simplest method is a method in which a pipe through which an electrolyte exhausted from the electrode passes is lengthened, and a constant flow velocity is obtained by inertia which is generated by the mass of the electrolyte in the pipe. In order to cause an electrolyte to flow at a more constant speed, the mass of the electrolyte in the pipe through which the electrolyte exhausted from the electrode passes is preferably equal to or more than one time the mass of the electrolyte from a pump or the like causing a pressure change to an inlet of the pipe, more preferably equal to or more than two times, and most preferably equal to or more than five times. Any upper limit of a mass ratio of an electrolyte may be selected. For example, the mass ratio may be 1000 times or less, 100 times or less, 30 times or less, 15 times or less, or 10 times or less.

[Examples]

Hereinafter, the present invention will be described in more detail on the basis of Examples, but the present invention is not limited to the Examples.

[Comparative Example 1]

(Cell configuration)

A cell of the redox flow battery having the configuration illustrated in FIG. 1 was used. An inlet nozzle 7 of a positive electrode chamber 3 of the cell was connected to a positive electrode liquid feed pump (not illustrated) via a Teflon (registered trademark) tube (an inner diameter of 5 mm and a length of 200 cm), and a suction side of the liquid feed pump was connected to a positive electrode liquid tank (not illustrated). An outlet nozzle 8 was connected to the positive electrode liquid tank via a Teflon (registered trademark) tube (an inner diameter of 5 mm and a length of 20 cm) such that a positive electrode electrolyte is returned to the positive electrode liquid tank from the outlet nozzle 8 of the positive electrode chamber 3 of the cell. An inlet nozzle 14 of a negative electrode chamber 11 was connected to a negative electrode liquid feed pump by using a similar tube on the negative electrode side, and a suction side of the liquid feed pump was connected to a negative electrode liquid tank. An outlet nozzle 15 was connected to the negative electrode liquid tank via a Teflon (registered trademark) tube such that a negative electrode electrolyte is returned to the negative electrode liquid tank from the outlet nozzle 15 of the negative electrode chamber 11. A pressure sensor was inserted into an opening of the inlet nozzle 7 from a gasket 16 of a positive electrode liquid inflow gutter 4 portion, and a pressure sensor was inserted into an opening of the inlet nozzle 14 from the gasket 16 of a negative electrode liquid inflow gutter 12 portion. As all of the pumps, volute pumps were used.

A Nafion (registered trademark) 212 membrane was used as the membrane 6.

Seven carbon felts (sheet form) were overlapped to fill each of the positive electrode chamber 3 and the negative electrode chamber 11, and were used as a positive electrode and a negative electrode. A shape of each electrode chamber has a horizontal width of 3 cm, a height of 15 cm, and a thickness of 0.2 cm, and the electrode chamber has a structure in which a liquid enters a lower part (the inlet nozzles 7 and 14 sides), and the liquid comes out of an upper part (the outlet nozzle 8 and 15 sides).

A carbon rolled plate was used as each of a collector plate 17 on the positive electrode side and a collector plate 18 on the negative electrode.

(Operation and estimation)

As a positive electrode electrolyte, a sulfuric acid aqueous solution of 4.5 mol/L containing a tetravalent vanadium ion of 1.8 mol/L was used. As a negative electrode electrolyte, a sulfuric acid aqueous solution of 4.5 mol/L containing a trivalent vanadium ion of 1.8 mol/L was used. Each electrolyte amount was 200 mL.

First, the positive electrode electrolyte and the negative electrode electrolyte were respectively supplied to and circulated in the positive electrode chamber 3 and the negative electrode chamber 11 of the battery under 12 KPa as pressures (gauge pressures) of the inlet nozzles 7 and 14.

Charge was performed at a current density of 100 mA/cm$^2$ while circulating the positive electrode electrolyte and the negative electrode electrolyte as mentioned above. The charge was stopped when a voltage reached 1.75 V, discharge was subsequently performed at 100 mA/cm$^2$, and the discharge was stopped when a voltage reached 1.0 V.

Generally, in a case where dust, an air bubble, or the like is accumulated in an electrode, an effective area thereof is decreased, and thus internal resistance is increased such that power efficiency is reduced. Thus, charge and discharge were repeated, and a power efficiency in the 10th cycle was obtained.

In the present comparative example and each Example which will be described later, the power efficiency was calculated according to the following equation.

$$\text{Power efficiency (\%)} = \{\text{discharge voltage (V)} \times \text{discharge current (A)} \times$$

$$\text{discharge time (h)}\}/\{\text{charge voltage (V)} \times \text{charge current (A)} \times \text{charge time (h)}\} \times 100$$

Subsequently, a current density for charge and discharge was increased to 600 mA/cm$^2$ from the 11th cycle, the circulated electrolytes were supplied in a state in which pressures (gauge pressures) of the inlet nozzles 7 and 14 were increased to 75 KPa, and the test was performed up to the 100th cycle.

In this case, power efficiencies in the 20th cycle and the 100th cycle were measured.

Results of measuring power efficiencies are shown in Table 1.

[Example 1]

The test was performed in the same manner as in Comparative Example 1 except for the following contents.

A plunger pump was used instead of the volute pump. The cell used in Comparative Example 1 can be used without hindrance under the pressure of 110 KPa, and thus a positive electrode electrolyte and a negative electrode electrolyte were respectively supplied to the positive electrode chamber 3 and the negative electrode chamber 11 simultaneously as follows.

1) Up to the 10th cycle, the electrolytes were supplied under 110 KPa as pressures (gauge pressures) of the inlet nozzle 7 and the inlet nozzle 14 for one second, and then were supplied under 0 KPa as the pressures for seven seconds, and this was repeatedly performed such that the electrolytes were supplied under an average pressure of 13.75 KPa. The amplitude of a pressure change in this case was 800% (=[110-0]/13.75).

2) In the 11th cycle and the subsequent cycles, the electrolytes were supplied under 110 KPa as pressures (gauge pressures) of the inlet nozzle 7 and the inlet nozzle 14 for three seconds, and then were supplied under 0 KPa as the pressures for one second, and this was repeatedly performed such that the electrolytes were supplied under an average pressure of 82.5 KPa. The amplitude of a pressure change in this case was 133% (=[110-0]/82.5).

Results of measuring power efficiencies are shown in Table 1.

[Example 2]

The test was performed in the same manner as in Comparative Example 1 except for the following contents.
A positive electrode electrolyte and a negative electrode electrolyte were respectively supplied to the positive electrode chamber 3 and the negative electrode chamber 11 simultaneously as follows.

1) Up to the 10th cycle, the electrolytes were supplied under 13 KPa as pressures (gauge pressures) of the inlet nozzle 7 and the inlet nozzle 14 for 0.2 seconds, and then were supplied under 11 KPa as the pressures for 0.2 seconds, and this was repeatedly performed such that the electrolytes were supplied under an average pressure of 12 KPa. The amplitude of a pressure change in this case was 17% (=[13-11]/12).
2) In the 11th cycle and the subsequent cycles, the electrolytes were supplied under 80 KPa as pressures (gauge pressures) of the inlet nozzle 7 and the inlet nozzle 14 for 0.5 seconds, and then were supplied under 70 KPa as the pressures for 0.5 seconds, and this was repeatedly performed such that the electrolytes were supplied under an average pressure of 75 KPa. The amplitude of a pressure change in this case was 13% (=[80-70]/75).

Results of measuring power efficiencies are shown in Table 1.

[Example 3]

The test was performed in the same manner as in Comparative Example 1 except for the following contents.
A gear pump was used instead of the volute pump.
Both of the two tubes between the inlet nozzles 7 and 14 and the liquid feed pumps were replaced with silicon tubes (each having an inner diameter of 3 mm, an outer diameter of 5 mm, and a length of 20 cm). Both of the tubes were pressed and fixed onto a laboratory table with a vibrator available in the market, and the test was performed by operating the vibrator by using a commercial power supply of 50 Hz.

1) Up to the 10th cycle, each of pressures (gauge pressures) of the inlet nozzle 7 and the inlet nozzle 14 was average 12 KPa, and it was observed that the pressure changed between about 10 and 15 KPa. The amplitude of a pressure change was 42% (=[15-10]/12).
2) In the 11th cycle and the subsequent cycles, each of pressures (gauge pressures) of the inlet nozzle 7 and the inlet nozzle 14 was average 75 KPa, and it was observed that the pressure changed between about 60 and 80 KPa. The amplitude of a pressure change was 27% (=[80-60]/75).

Results are shown in Table 1.

[Table 1]

| | Power efficiency (%) | | |
|---|---|---|---|
| | 10th cycle | 20th cycle | 100th cycle |
| Comparative Example 1 | 86 | 68 | 8 |
| Example 1 | 87 | 73 | 41 |
| Example 2 | 86 | 70 | 32 |
| Example 3 | 88 | 71 | 37 |

It can be seen in each Example that a reduction in a power efficiency is smaller even in the 100th cycle than in the comparative example.

Industrial Applicability

Provided is a method for operating a redox flow battery, capable of operating the redox flow battery for a long period of time.

Reference Signs List

3:      POSITIVE ELECTRODE CHAMBER
4:      POSITIVE ELECTRODE LIQUID INFLOW GUTTER
5:      POSITIVE ELECTRODE LIQUID OUTFLOW GUTTER
6:      MEMBRANE
7:      POSITIVE ELECTRODE LIQUID INLET NOZZLE
8:      POSITIVE ELECTRODE LIQUID OUTLET NOZZLE
11:     NEGATIVE ELECTRODE CHAMBER
12:     NEGATIVE ELECTRODE LIQUID INFLOW GUTTER
13:     NEGATIVE ELECTRODE LIQUID OUTFLOW GUTTER
14:     NEGATIVE ELECTRODE LIQUID INLET NOZZLE
15:     NEGATIVE ELECTRODE LIQUID OUTLET NOZZLE
16:     GASKET
17:     POSITIVE ELECTRODE COLLECTOR PLATE
18:     NEGATIVE ELECTRODE COLLECTOR PLATE

**Claims**

1. A method for operating a redox flow battery which has two electrodes including a positive electrode and a negative electrode and a membrane, and performs charge and discharge by supplying a positive electrode electrolyte to the positive electrode and supplying a negative electrode electrolyte to the negative electrode, the method comprising: a step of changing one or both of pressures of the positive electrode electrolyte which is supplied to the positive electrode and the negative electrode electrolyte which is supplied to the negative electrode in a cycle of 1/60 to 10 seconds.

2. The method for operating a redox flow battery according to claim 1, wherein an amplitude of the change is equal to or more than 10% of an average pressure of the supplied electrolytes.

3. The method for operating a redox flow battery according to claim 1 or 2, wherein both of the pressures of the electrolyte which is supplied to the positive electrode and the electrolyte which is supplied to the negative electrode are changed.

4. The method for operating a redox flow battery according to claim 3, wherein a pressure change of the electrolyte which is supplied to the positive electrode and a pressure change of the electrolyte which is supplied to the negative electrode are synchronized with each other.

5. The method for operating a redox flow battery according to any one of claims 1 to 4, wherein, in the step, the electrolyte is supplied to the electrode while changing a pressure of the electrolyte, and the electrolyte is exhausted from the electrode at a constant speed.

6. The method for operating a redox flow battery according to any one of claims 1 to 5, wherein the step of changing a pressure has a sub-step of applying a pressure and a sub-step of not applying a pressure.

7. The method for operating a redox flow battery according to any one of claims 1 to 6, wherein the step of changing a pressure has a sub-step of applying a pressure and a sub-step of applying a pressure lower than the pressure in the sub-step.

# FIG. 1

## INTERNATIONAL SEARCH REPORT

| International application No. |
|---|
| PCT/JP2017/045434 |

A. CLASSIFICATION OF SUBJECT MATTER
Int.Cl. H01M8/18(2006.01)i, H01M8/04746(2016.01)i

According to International Patent Classification (IPC) or to both national classification and IPC

B. FIELDS SEARCHED

Minimum documentation searched (classification system followed by classification symbols)
Int.Cl. H01M8/18, H01M8/04746

Documentation searched other than minimum documentation to the extent that such documents are included in the fields searched
| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-146306 A (SUMITOMO ELECTRIC INDUSTRIES, LTD.) 12 August 2016 & US 2017/0033391 A1 & WO 2016/129386 A1 & CN 106165177 A & TW 201637271 A | 1-7 |
| A | JP 2015-225820 A (SUMITOMO ELECTRIC INDUSTRIES, LTD.) 14 December 2015 & US 2017/0200965 A1 & WO 2015/182364 A1 & EP 3151324 A1 & TW 201603385 A & CN 106463753 A | 1-7 |
| A | JP 2009-016219 A (SUMITOMO ELECTRIC INDUSTRIES, LTD.) 22 January 2009 (Family: none) | 1-7 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 January 2018 (26.01.2018) | 13 February 2018 (13.02.2018) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016245564 A

- JP H10308232 B